# EUROPÄISCHE PATENTSCHRIFT

(11) **EP 0 673 215 B1**
(45) Veröffentlichungstag und Bekanntmachung des Hinweises auf die Patenterteilung: **10.03.1999**
(21) Anmeldenummer: 94902759.3
(22) Anmeldetag: 10.12.1993
(51) Int. Cl.: A47B 96/20, B32B 21/06, B32B 23/08, B32B 27/10, B32B 31/20

(54) **PAPIERBESCHICHTETER VERBUND, VERFAHREN ZU DESSEN HERSTELLUNG SOWIE DESSEN VERWENDUNG IN DER MÖBEL- UND PLATTENINDUSTRIE**
PAPER-COATED COMPOSITE, PROCESS FOR PRODUCING THE SAME AND ITS USE IN THE FURNITURE AND PANEL INDUSTRY
COMPOSITE A REVETEMENT EN PAPIER, SON PROCEDE DE PRODUCTION ET SON UTILISATION DANS LA FABRICATION DE MEUBLES ET DE PANNEAUX

(30) Priorität: 11.12.1992 DE 4241834
(43) Veröffentlichungstag der Anmeldung: 27.09.1995
(73) Patentinhaber: BASF Coatings Aktiengesellschaft, 48165 Münster (DE)
(72) Erfinder: KIRIAZIS, Leonidas, Dr., D-48151 Münster (DE); SCHUNCK, Stephan, Dr., D-86161 Augsburg (DE)
(74) Vertreter: Fitzner, Uwe, Dr.
(86) Internationale Anmeldenummer: EP9303501
(87) Internationale Veröffentlichungsnummer: WO9413176

(56) Entgegenhaltungen:
- EP-A- 0 429 253
- DE-U- 8 800 635
- FR-A- 2 477 964
- US-A- 5 243 126

## Beschreibung

Die vorliegende Erfindung betrifft einen Verbund aus einem Trägermaterial, einer thermoplastischen Kunststoffolie und einer Papierschicht. Die Erfindung betrifft außerdem Verfahren zur Herstellung des Verbundes Sowie dessen Verwendung in der Möbel- und Plattenindustrie.

Imprägnierte Papiere, die auf Platten verpreßt eine Vorbearbeitung im Sinne einer Grundierung darstellen (Grundierfolie) oder häufig auch eine dekorative Wirkung entfalten (Dekorfolie), sind in der Möbel- und Plattenindustrie seit langem bewährt. Die Verknappung und Verteuerung echter Furniere hat zu einem verstärkten Einsatz letzterer Folien ganz wesentlich beigetragen. Die Folien müssen nach dem Verpressen auf Span- oder Holzfaser-Hartplatten nachlackiert werden, da sonst der Oberflächeneffekt nicht ausreichend ist.

Im Zuge der Vereinfachung des Produktionsablaufs setzt sich eine verbesserte Art imprägnierter Papiere, die Fertigfolie, mehr und mehr durch. Hierbei handelt es sich um imprägnierte unifarbige oder bedruckte Papierfolien, die beim Folienhersteller mit einem Lackanstrich versehen werden. Die so erhaltenen Finish-Folien und Endlaskanten (zur kontinuierlichen Kantenbeschichtung) werden als Rollenware an die Möbel- und Plattenindustrie geliefert, wo sie unter Hitze- und/oder Druckeinwirkung mit Substraten, wie zum Beispiel Span- oder Hartfaserplatten, verleimt werden. Auf diese Weise werden Flächen erhalten, die in der Regel keiner weiteren Lackierung mehr bedürfen, also "preßfallend" weiterverarbeitet werden.

Bekannt sind Verbundsysteme, die hergestellt werden durch Verkleben eines oberflächenveredelten Papiers, d.h. eines zum Beispiel lackierten Papiers, mit einem Trägermaterial, welches aus Spanplatten oder anderweitigen Holzwerkstoffen besteht. Üblicherweise werden dabei als Kleber Harnstoffleime verwendet, die den Nachteil einer Formaldehyd-Emission aufweisen und damit ökologisch bedenklich sind. Bei der Verwendung üblicher Spanplatten als Trägermaterial ist die Rauhigkeit der Oberfläche oftmals so groß, daß das Trägermaterial erst einmal gespachtelt werden muß. Dieses Spachteln ist jedoch mit einem zusätzlichen Verfahrensschritt verbunden, was das Verfahren aufwendig macht und das fertige Produkt erheblich verteuert. Die bekannten papierbeschichteten Verbundsysteme sind daher aus ökologischer und aus ökonomischer Sicht her verbesserungsbedürftig.

Aus der SU-A-589138 ist ein Verfahren zur Beschichtung von Holzwerkstoffen mit Polyethylenfolien bekannt, wobei der mit der Polyethylenfolie beschichtete Holzwerkstoff mit einer dekorativen Beschichtung und zwar mit einem mit einem modifizierten Melamin-Formaldehyd-Harz imprägnierten Papier, verpreßt wird. Die Dicke der verwendeten Polyethylenfolien beträgt 0,05 mm und 0,25 mm.

Nachteilig sind bei den in der SU-A-589138 beschriebenen Verbunden die relativ hohe Formaldehyd-Emission sowie die schlechte Haftung der Polyethylenfolie auf dem Trägermaterial.

Die JP-A-50-87480 schließlich betrifft dekorative Verbundsysteme die erhalten werden durch Verkleben eines imprägnierten Papierlaminats mit einem thermoplastischen PVC-Film, wobei als Kleber Ethylen-Vinylacetat-Copolymere verwendet werden.

Beschichtungssysteme werden auch in der EP-A-0429253, CA-A-2035001 und der DE-U-8800653 beschrieben. Hierbei handelt es sich jedoch nicht um die Verwendung zusammengesetzter Folien zur Verwendung in der Möbel- und Plattenindustrie.

Der vorliegenden Erfindung lag somit die Aufgabe zugrunde, papierbeschichtete Verbunde auf der Basis von Holzwerkstoffen zur Verfügung zu stellen, die optisch einwandfreie Oberflächenstrukturen auch ohne Verwendung eines Spachtels aufweisen sollten. Die Resistenz der Oberflächen der Verbunde gegenüber verschiedenen Reagenzien zum Beispiel Lebensmitteln, wie Bier, Kaffee u.ä., und die Kratzfestigkeit der Beschichtungen sollten sehr gut sein; weiterhin sollte die Haftung zwischen dem Trägermaterial und dem oberflächenveredelten Papier ausgezeichnet sein. Außerdem sollte bei der Herstellung der papierbeschichteten Verbunde auf eine Imprägnierung der verwendeten Papiere verzichtet werden können. Die Verbunde sollten aus ökologischen Gründen keine Formaldehyd-Emission aufweisen, des weiteren sollten sich die Verbunde leicht und kostengünstig herstellen lassen, wobei ein möglichst einfaches Herstellungsverfähren anzustreben ist.

Die der Erfindung zugrunde liegende Aufgabe wird überraschenderweise gelöst durch Verbunde aus einem Trägermaterial aus einem Holzwerkstoff, einer thermoplastischen Kunststoffolie und einer Papierschicht. Die Verbunde sind dadurch gekennzeichnet, daß sie aufgebaut sind aus
A) einem Trägermaterial aus einem Holzwerkstoff
B) einer darauf aufgebrachten thermaplastischen coextrudierten Kunststoffolie mit dem Aufbau B₁-B₂-B₃, wobei die zur Herstellung der Kunststoffschichten B₁ und B₃ verwendeten Kunststoffe gleich oder verschieden sein können und haftungsvermittelnde Kunststoffe sind ausgewählt aus der Gruppe der polarmodifizierten Polyolefine und der zur Herstellung der Kunststoffschicht B₂ verwendete Kunststoff aus Polyethylen Homo- und/oder Copolymerisaten oder Polypropylen Homo- und/oder Copolymerisaten besteht,
C) einer Papierschicht und
D) einer auf der Papierschicht aufgebrachten oberflächenveredelnden Beschichtung, welche ggfs. mit Hilfe eines Klebstoffes mit der Papierschicht C) verbunden ist.

Als Trägermaterial A) kommen Span- und Hartfaserplatten sowie MDF (Medium density fibre = mitteldichte Faserplatten)-Platten in Frage.

Als thermoplastische Kunststoffolie B) wird somit eine coextrudierte Kunststoffolie verwendet mit dem Aufbau B₁-B₂-B₃, wobei die zur Herstellung der Kunststoffschichten B₁ und B₃ verwendeten Kunststoffe gleich oder verschieden sein können und haftungsvermittelnde Kunststoffe sind, die ausgewählt sind aus der Gruppe der polarmodifizierten Polyolefine, und der zur Herstellung der Kunststoffschicht B₂ verwendete Kunststoff aus Polyethylen-Homo- und/oder Copolymerisaten oder Polypropylen-Homo- und/oder Copolymerisaten besteht. Die zur Herstellung der Schichten B₁ und B₃ verwendeten haftungsvermittelnden Kunststoffe sind die gleichen, die zur Herstellung der Monofolie B) zuvor bereits beschrieben wurden. Besonders bevorzugt werden zur Herstellung der Kunststoffschichten B₁ und B₃ der coextrudierten Kunststoffolie B) Copolymerisate von Ethylen, Acrylsäure und/oder Methacrylsäure und einem oder mehreren Ester(n) der Acrylsäure und/oder Methacrylsäure mit Monoalkoholen mit 1 bis 8 Kohlenstoffatomen und als Schicht B₂ der coextrudierten Kunststoffolie Polyethylen-Homopolymerisate verwendet. Als Polyethylen-Homopolymerisate kommen dabei Polyethylene niedriger Dichte (PE-LD), mittlerer Dichte (PE-MD), hoher Dichte (PE-HD), Linear-low und Linear-very-low-density Polyethylen (PE-LLD, PE-VLD) in Frage. Geeignete Homopolymerisate des Polyethylens sind beispielsweise die unter der Handelsbezeichnung Lupolen® (BASF) erhältlichen Polyethylene hoher, mittlerer und niedriger Dichte.

Die Schichtstärke der als Komponente B) verwendeten Mono- und Coextrusionsfolien liegt bei mindestens 5 µm. Wenn die Schichtstärke unter 5 µm liegt, können Oberflächenrauhigkeiten des Trägermaterials nicht mehr ausgeglichen werden, so daß die Verwendung eines Spachtels unter Umständen notwendig ist. Bevorzugt liegt die Schichtstärke von B) im Bereich von 20 µm bis 150 µm, je nach Rauhigkeit des Trägermaterials A).

Die in dem erfindungsgemäßen Verbund verwendete Papierschicht C) kann aus imprägnierten, vor-imprägnierten und nicht-imprägnierten Papieren sowie weiteren dekorativ einsetzbaren Trägermaterialien bestehen. Als Imprägniermittel werden üblicherweise Harnstoff- und Melaminharze sowie Acrylat- und Polyesterharze verwendet. Die Papiere werden damit so verfestigt, daß sie beim Schneiden, Bohren und Fräsen nicht aufspalten. Durch geeignete Zusätze zu den Imprägniermitteln kann auch die Überlackierbarkeit der Papiere beeinflußt werden.

Vorzugsweise werden gemäß der vorliegenden Erfindung nicht-imprägnierte Papiere aus ökologischen Gründen verwendet.

Die Papierschicht C) wird mit einer oberflächenveredelnden Beschichtung D) versehen, welche beispielsweise aus lösemittelhaltigen oder wäßrigen Reaktionslacken erhalten wird. Besonders bevorzugt werden als Foliendeckstriche D) wasserverdünnbare Reaktionslacke eingesetzt, die sich aufgrund ihrer hohen Reaktivität bei der Härtung soweit verfestigen, daß sich die Oberfläche beim späteren Preßvorgang nicht mehr verändert, d.h. nicht mehr fließt. Beispiele für geeignete Lacksysteme sind strahlenhärtbare, d.h. UV- oder elektronenstrahlhärtbare Lacksysteme, Nitrocelluloselacke, Acrylatharze u.ä.. Geeignete strahlenhärtbare Lacke auf der Basis von ungesättigten Polyestern, Polyesteracrylaten, Polyetheracrylaten, Epoxidacrylaten und Urethanacrylaten sowie Aminoplast- bzw. Phenolharzen sind in der DE-A-29 47 597 beschrieben. Wäßrige Beschichtungsmittel für Finish-Folien, die als Komponente D) gemäß der vorliegenden Erfindung geeignet sind, sind beispielsweise aus der DE-A-40 24 835, der DE-A-40 01 672, der DE-A-39 05 268, der DE-A-37 05 255, der DE-A-36 10 764 und der DE-A-36 10 732 bekannt. Besonders bevorzugt sind dabei wäßrige Beschichtungsmittel, die als Lackkomponente I wasserverdünnbare Melaminharze, gegebenenfalls wasserverdünnbare Harnstoffharze, Polyole, gegebenenfalls selbstvernetzende Polyacrylat-Dispersionen und als Lackkomponente II einen sauren Härtungskatalysator enthalten. Die Lackkomponenten I und II werden dabei bevorzugt unmittelbar vor der Applikation gemischt, und der resultierende Naßfilm wird während einer Zeit von 8 s bis 50 s bei einer Temperatur zwischen 90 °C und 200 °C eingebrannt. Bezüglich weiterer Einzelheiten der als Lackkomponente D) verwendbaren Lacke wird auf die in dieser Anmeldung angegebene Literatur verwiesen. Besonders bevorzugt wird die oberflächenveredelnde Beschichtung D) aus wärmehärtbaren wäßrigen Lacken oder aus strahlenhärtbaren Lacken erhalten.

Als Oberflächenveredelnde Beschichtung D) kommen gemäß der vorliegenden Erfindung auch thermoplastische Monofolien oder thermoplastische coextrudierte Folien in Frage.

Beispiele für thermoplastische Harzfolien D) sind PolyOlefin-Folien, Polyamid-Folien, Polyester-Folien, Polyurethan-Folien, Polyvinylchlorid-Folien, Polyvinylidenchlorid-Folien und Polycarbonat-Folien. Die zusammengesetzten Folien werden beispielsweise erhalten durch gemeinsames Extrudieren von mindestens zwei der obengenannten Kunststoffe. Beispiele für geeignete Polyolefine sind Polyethylen-Homopolymerisate, Polypropylen-Homopolymerisate sowie Copolymerisate von Ethylen und Propylen. Polyolefin-Kunststoffe zur Herstellung der Polyolefin-Folien sind beispielsweise unter den folgenden Markennamen im Handel erhältlich:

Escorene, Lupolen, Lotader, Lacqtene, Dowlex, Primacor, Surlyn, Admer, Sclair, Stamylan, Lucalen u.a.

Beispiele für geeignete Polyamide sind Polyamid 6 (Polyamid, hergestellt aus ε-Aminocapronsäure), Polyamid 6,6 (Polyamid, hergestellt aus Hexamethylendiamin und Sebacinsäure), Polyamid 66,6 (Mischpolyamid, das aus Polyamid 6 und Polyamid 6,6 besteht), Polyamid 11 (Polyamid, hergestellt aus ω-Aminoundecansäure) und Polyamid 12 (Polyamid, hergestellt aus ω-Aminolaurinsäure oder aus Lauryllactam). Beispiele für geeignete Handelsprodukte sind Grilon, Sniamid und Ultramid.

Geeignete Polyester-Kunststoffe zur Herstellung der oberflächenveredelnden Beschichtung D) sind beispielsweise Polyethylenterephthalat und Polybutylenterephthalat. Geeignet sind auch andere Polyester auf Basis von Terephthalsäure, Isophthalsäure und Phthalsäure und verschiedener Polyole, wie zum Beispiel Polyethylenglykol und Polytetramethylenglykole unterschiedlichen Polymerisationsgrades. Beispiele für geeignete Handelsprodukte sind Hostaphan, Melinex und Hostadur.

Je nach Haftungsvermögen der als oberflächenveredelnde Beschichtung verwendbaren thermoplastischen Kunststoffolien werden diese mittels eines coextrudierten Haftvermittlers, welcher beispielsweise aus polarmodifiziertem Polyolefin bestehen kann, oder mittels der bereits beschriebenen Klebstoffe, welche zum Beispiel aus der EP-A-199 228 bekannt sind, mit der Papierschicht C) verklebt. Es ist aber auch durchaus je nach Auswahl der Kunststoffolie möglich, auf einen Haftvermittler und eine Klebstoffschicht zu verzichten.

Selbstverständlich ist es im Rahmen der Erfindung auch möglich, auf die oberflächenveredelnde Beschichtung D) noch eine weitere oder noch mehrere weitere Beschichtungen aufzubringen. Bei der Verwendung von thermoplastischen Kunststoffolien als Beschichtung D) müssen diese in diesem Fall zunächst zum Beispiel mittels Corona-Entladung vorbehandelt werden.

Die erfindungsgemäßen Verbunde aus dem Trägermaterial A), der thermoplastischen Kunststoffolie B), der Papierschicht C) und der oberflächenveredelnden Beschichtung D) können auf verschiedenen Wegen hergestellt werden. So ist es möglich, eine oberflächenveredelte Papierschicht auf das Trägermaterial A) mit Hilfe der Kunststoffolie B) zu verpressen. Ein weiteres mögliches Verfahren besteht darin, das mit der oberflächenveredelnden Beschichtung D) beschichtete Papier mit der Kunststoffolie B) zu kaschieren und den erhaltenen Verbund auf das Trägermaterial A) zu verpressen bzw. zu kaschieren. Desweiteren kann die Papierschicht C) in einem Verfahrensschritt beidseitig mit der oberflächenveredelnden Beschichtung D) und der Kunststoffolie B) beschichtet werden, wobei in einer zweiten Stufe der erhaltene Verbund auf das Trägermaterial A) aufgebracht wird.

Bevorzugt ist jedoch ein Herstellungsverfahren, bei dem die Komponenten A), B), C) und D) in einem Verfahrensschritt zu dem erfindungsgemäßen Verbund verpreßt bzw. kaschiert werden.

Die thermoplastische Kunststoffolie B) kann auch mittels der Direktextrusion verarbeitet werden. Dabei wird der zur Herstelllung von B) bestimmte thermoplastische Kunststoff direkt, wenn er aus der Extrusionsanlage im geschmolzenen Zustand austritt, auf das Trägermaterial A) bzw. auf die Papierschicht C) aufgebracht.

Die Komponenten A) bis D) werden zur Herstellung der erfindungsgemäßen Verbunde üblicherweise während einer Zeit von 5 bis 30 s bei 120 °C bis 180 °C und einem Druck von 5 bis 20 kp/cm² verpreßt.

Die erhaltenen papierbeschichteten Verbunde weisen optisch einwandfreie Oberflächenstrukturen auch ohne Verwendung eines Spachtels auf. Die erhaltenen Oberflächen weisen eine hervorragende Resistenz gegenüber verschiedenen Reagenzien, wie zum Beispiel Lebensmitteln, (DIN 68861) auf. Die Haftung zwischen dem Trägermaterial A) und dem oberflächenveredelten Papier ist ausgezeichnet. Außerdem weisen die Verbunde keine Formsldehyd-Emissionen auf, und sie lassen sich leicht und kostengünstig herstellen.

## Patentansprüche

1. Verbund aus einem Trägermaterial, einer thermoplastischen Kunststoffolie und einer Papierschicht,
dadurch gekennzeichnet, daß der Verbund aufgebaut ist aus
A) einem Trägermaterial aus einem Holzwerkstoff
B) einer darauf aufgebrachten thermoplastischen coextrudierten Kunststoffolie mit dem Aufbau B₁-B₂-B₃, wobei die zur Herstellung der Kunststoffschichten B₁ und B₃ verwendeten Kunststoffe gleich oder verschieden sein können und haftungsvermittelnde Kunststoffe sind ausgewählt aus der Gruppe der polarmodifizierten Polyolefine und der zur Herstellung der Kunststoffschicht B₂ verwendete Kunststoff aus Polyethylen Homo- und/oder Copolymerisaten oder Polypropylen Homo- und/oder Copolymerisaten besteht,
C) einer Papierschicht und
D) einer auf der Papierschicht aufgebrachten oberflächenveredelnden Beschichtung, welche ggf. mit Hilfe eines Klebstoffes mit der Papierschicht C) verbunden ist.

2. Verbund nach Anspruch 1,
dadurch gekennzeichnet, daß zur Herstellung der Schichten B₁ und B₃ der coextrudierten Kunststoffolie Copolymerisate von Ethylen, Acrylsäure und/oder Methacrylsäure und einem Ester oder mehreren Estern der Acrylsäure und/oder Methacrylsäure mit Monoalkoholen mit 1 bis 8 Kohlenstoffatomen verwendet werden und als Schicht B₂ der coextrudierten Kunststoffolie Polyethylen Homopolymerisat verwendet wird.

3. Verbund nach Anspruch 1 oder 2,
dadurch gekennzeichnet, daß die Stärke der thermoplastischen Kunststoffolie B) je nach Rauhigkeit des Trägermaterials A) im Bereich von 20 bis 150 µm liegt.

4. Verbund nach Anspruch 1 bis 3,
dadurch gekennzeichnet, daß die Papierschicht C) aus einem nicht imprägnierten Papier besteht.

5. Verbund nach Anspruch 1 bis 4,
dadurch gekennzeichnet, daß die oberflächenveredelnde Beschichtung D) aus wärmehärtbaren wäßrigen oder aus strahlenhärtbaren Lacken erhalten wird.

6. Verbund nach Anspruch 1 bis 5,
dadurch gekennzeichnet, daß die oberflächenveredelnde Beschichtung D) aus einer thermoplastischen Monofolie oder aus einer thermoplastischen coextrudierten Folie erhalten wird.

7. Verfahren zur Herstellung eines Verbundes nach einem oder mehreren der Ansprüche 1 bis 6,
dadurch gekennzeichnet, daß die Komponenten A), B), C) und D) in einem Verfahrensschritt zu einem Verbund verpreßt bzw. kaschiert werden.

8. Verfahren zur Herstellung des Verbundes nach einem oder mehreren der Ansprüche 1 bis 6, dadurch gekennzeichnet, daß die Komponenten A), B), C) und D) in mindestens zwei Verfahrensschritten zu einem Verbund verpreßt bzw. kaschiert werden.

9. Verfahren nach Anspruch 8,
dadurch gekennzeichnet, daß aus den Komponenten C) und D) ein oberflächenveredeltes Papier hergestellt wird, welches mit Hilfe der thermoplastischen Kunststoffolie B) auf das Trägermaterial A) verpreßt wird.

10. Verfahren nach Anspruch 8,
dadurch gekennzeichnet, daß die Papierschicht C) in einem Schritt mit der oberflächenveredelnden Beschichtung D) und der thermoplastischen Kunststoffolie,B) beschichtet wird und in einer zweiten Stufe der erhaltene Verbund auf das Trägermaterial A) aufgebracht wird.

11. Verfahren nach Anspruch 8,
dadurch gekennzeichnet, daß aus den Komponenten C) und D) ein oberflächenveredeltes Papier hergestellt wird, dieses mit der thermoplastischen Kunststoffolie B) kaschiert wird und der erhaltene Verbund in einer dritten Stufe mit dem Trägermaterial A) verpreßt wird.

12. Verwendung der Verbunde nach einem oder mehreren der Ansprüche 1 bis 6 in der Möbel- und Plattenindustrie.

## Claims

1. Laminate comprising a substrate, a thermoplastic film and a paper layer, characterized in that the laminate is composed of
A) a substrate made from a woodworking material,
B) a thermoplastic coextruded film having the structure B₁-B₂-B₃, where the plastics used for the production of the plastic layers B₁ and B₃ may be identical or different and are adhesion-promoting plastics which are selected from the group comprising the polyolefins modified to render them polar, and the plastic used for the production of the plastic layer B₂ consists of polyethylene homo- and/or copolymers or polypropylene homo- and/or copolymers,
C) a paper layer and
D) a surface-finishing coating which is applied on the paper layer and, if required, is bonded to the paper layer C) with the aid of an adhesive.

2. Laminate according to Claim 1, characterized in that copolymers of ethylene, acrylic acid and/or methacrylic acid and of an ester or several esters of acrylic acid and/or methacrylic acid with monoalcohols having 1 to 8 carbon atoms are used for the production of the layers B₁ and B₃ of the coextruded plastic film, and a polyethylene homopolymer is used as the layer B₂ of the coextruded plastic film.

3. Laminate according to Claims 1 or 2, characterized in that the thickness of the thermoplastic film B) is in the range from 20 to 150 µm, depending on the roughness of the substrate A).

4. Laminate according to Claims 1 to 3, characterized in that the paper layer C) consists of a nonimpregnated paper.

5. Laminate according to Claims 1 to 4, characterized in that the surface-finishing coating D) is obtained from heat-curable aqueous finishes or from radiation-curable finishes.

6. Laminate according to Claims 1 to 5, characterized in that the surface-finishing coating D) is obtained from a thermoplastic monofilm or from a thermoplastic coextruded film.

7. Process for the production of the laminate according to one or more of Claims 1 to 6, characterized in that the components A), B), C) and D) are pressed or laminated in one process step to give a laminate.

8. Process for the production of the laminate according to one or more of Claims 1 to 6, characterized in that the components A), B), C) and D [sic] are pressed or laminated in at least two process steps to give a laminate.

9. Process according to Claim 8, characterized in that a surface-finished paper is produced from the components C) and D) and is pressed onto the substrate A) with the aid of the thermoplastic film B).

10. Process according to Claim 8, characterized in that the paper layer C) is coated in one step with the surface-finishing coating D) and the thermoplastic film B) and the laminate obtained is applied to the substrate A) in a second stage.

11. Process according to Claim 8, characterized in that a surface-finished paper is produced from the components C) and D), the said paper is laminated with the thermoplastic film B) and the laminate obtained is pressed with the substrate A) in a third stage.

12. Use of the laminates according to one or more of Claims 1 to 6 in the furniture and board industry.

## Revendications

1. Produit composé fait d'un matériau vecteur, d'une feuille de matière synthétique thermoplastique et d'une couche de papier, caractérisé en ce que le produit composé est constitué
A) d'un matériau vecteur en matériau dérivé du bois,
B) d'une feuille de matière synthétique co-extrudée thermoplastique, qui est appliquée par-dessus, avec la structure B₁-B₂-B₃, les matières synthétiques utilisées pour la fabrication des couches de matière synthétique B₁ et B₃ pouvant être identiques ou différentes et étant des matières synthétiques favorisant l'adhésion, qui sont choisies parmi le groupe des polyoléfines modifiées en polarité, et la matière synthétique utilisée pour la fabrication de la couche de matière synthétique B₂ se composant d'homopolymères et/ou de copolymères du polyéthylène ou d'homopolymères et/ou de copolymères du polypropylène,
C) d'une couche de papier et
D) d'un revêtement appliqué sur la couche de papier, à amélioration en surface, qui est relié à la couche de papier (C), le cas échéant, à l'aide d'un adhésif.

2. Produit composé selon la revendication 1, caractérisé en ce que l'on utilise, pour la fabrication des couches B₁ et B₃ de la feuille de matière synthétique co-extrudée, des copolymères de l'éthylène, de l'acide acrylique et/ou de l'acide méthacrylique et d'un ester ou de plusieurs esters de l'acide acrylique et/ou de l'acide méthacrylique avec des monoalcools ayant de 1 à 8 atomes de carbone et, en tant que couche B₂ de la feuille de matière synthétique co-extrudée, un homopolymère du polyéthylène.

3. Produit composé selon la revendication 1 ou 2, caractérisé en ce que l'épaisseur de la feuille de matière synthétique a) se situe, selon la rugosité du matériau vecteur A), dans le domaine de 20 à 150 microns.

4. Produit composé selon la revendication 1 à 3, caractérisé en ce que la couche de papier C) se compose d'un papier non imprégné.

5. Produit composé selon la revendication 1 à 4, caractérisé en ce que le revêtement à amélioration en surface D) est obtenu à partir de laques aqueuses thermodurcissables ou de laques durcissables par irradiation.

6. Produit selon la revendication 1 à 5, caractérisé en ce que le revêtement D) à amélioration en surface est obtenu à partir d'une feuille monocouche thermoplastique ou d'une feuille co-extrudée thermoplastique.

7. Procédé de fabrication d'un produit composé selon une ou plusieurs des revendications 1 à 6, caractérisé en ce que les composants A), a), C) et D) sont comprimés, respectivement soumis à contre-collage, pour former un produit composé en une étape de procédé.

8. Procédé de fabrication du produit composé selon une ou plusieurs des revendications 1 à 6, caractérisé en ce que les composants A), a), C) et D) sont comprimés, respectivement soumis à contre-collage, pour former un produit composé en deux étapes de procédé.

9. Procédé selon la revendication 8, caractérisé en ce que l'on fabrique, à partir des composants C) et D), un papier à amélioration en surface, qui est pressé sur le matériau vecteur A) à l'aide de la feuille de matière synthétique thermoplastique B).

10. Procédé selon la revendication 8, caractérisé en ce que la couche de papier C) est revêtue, en une étape, du revêtement à amélioration en surface D) et de la feuille de matière synthétique thermoplastique B), et que le produit composé obtenu est appliqué, en une deuxième étape, sur le matériau vecteur A).

11. Procédé selon la revendication 8, caractérisé en ce que l'on fabrique un papier à amélioration en surface à partir des composants C) et D), que l'on soumet celui-ci à contre-collage avec la feuille de matière synthétique thermoplastique B) et que l'on presse le produit composé obtenu en une troisième étape sur le matériau vecteur A).

12. Utilisation des produits composés selon une ou plusieurs des revendications 1 à 6 dans l'industrie des meubles et des panneaux.
